# EUROPEAN PATENT APPLICATION

(11) **EP 4 738 869 A1**
(43) Date of publication of application: **06.05.2026**
(21) Application number: 24849507.9
(22) Date of filing: 26.07.2024
(51) Int. Cl.: H04N 25/58, H04N 25/78, H04N 23/54

(54) **IMAGE SENSOR, ELECTRONIC DEVICE COMPRISING IMAGE SENSOR, AND METHOD FOR OPERATING SAME**

(30) Priority: 28.07.2023 KR 20230099089; 19.09.2023 KR 20230124642
(71) Applicant: Samsung Electronics Co., Ltd., Suwon-si, Gyeonggi-do 16677 (KR)
(72) Inventor: SHIMOKAWA, Shuichi, Suwon-si, Gyeonggi-do 16677 (KR); KIM, Dongsoo, Suwon-si, Gyeonggi-do 16677 (KR); PARK, Jaehyoung, Suwon-si, Gyeonggi-do 16677 (KR); KANG, Kawang, Suwon-si, Gyeonggi-do 16677 (KR); MOON, Inah, Suwon-si, Gyeonggi-do 16677 (KR); SONG, Byeongjoo, Suwon-si, Gyeonggi-do 16677 (KR); YOUN, Yeotak, Suwon-si, Gyeonggi-do 16677 (KR); WON, Jonghoon, Suwon-si, Gyeonggi-do 16677 (KR)
(74) Representative: Appleyard Lees IP LLP
(86) International application number: PCT/KR2024/010923
(87) International publication number: WO 2025/028938

(57) **Abstract**

An electronic device according to an embodiment may comprise: a lens unit; an image sensor for receiving light which has passed through the lens unit and converting same into an electrical signal; and at least one processor configured to control the image sensor. The image sensor may read out a pixel value on the basis of a first readout operation period when outputting an image frame on the basis of a first readout mode. The image sensor may read out a pixel value on the basis of a second readout operation period longer than the first readout operation period when outputting an image frame on the basis of a second readout mode. The image sensor may be configured such that, when performing a multi-frame photographing operation including a first operation of outputting a first image frame on the basis of the first readout mode and a second operation of outputting a second image frame on the basis of the second readout mode, on the basis of a request of the at least one processor, the image sensor performs the first operation on the basis of a third read operation period equal to/longer than the second read operation period, and performs the second operation on the basis of the third read operation period. Various other embodiments are possible.

## Description

### [Technical Field]

The disclosure relates to an image sensor, an electronic device including the image sensor and an operating method thereof, and a computer-readable recording medium to perform the operating method.

### [Background Art]

An electronic device may include an image sensor for capturing an image of a subject. The image sensor may detect information on the captured image of the subject by using a photoelectric transformation element, which outputs electrical signals according to an intensity of light reflected from a subject. For example, the image sensor may include a complementary metal-oxide semiconductor (CMOS) image sensor or a charge-coupled device (CCD) image sensor.

The above information is presented as related art information only to assist with understanding of the disclosure. No determination or assertion is made as to whether any of the above might be applicable as prior art with regard to the disclosure.

### [Disclosure of Invention]

### [Solution to Problem]

An electronic device according to an embodiment may include a lens unit, an image sensor configured to receive light passing through the lens unit and to convert the light into an electrical signal, and at least one processor configured to control the image sensor. When an image frame is outputted based on a first readout mode, the image sensor may read out a pixel value based on a first readout operation period. When an image frame is outputted based on a second readout mode, the image sensor may read out a pixel value based on a second readout operation period which is longer than the first readout operation period. When performing a multi-frame capturing operation including a first operation of outputting a first image frame based on the first readout mode and a second operation of outputting a second image frame based on the second readout mode is performed based on a request of the at least one processor, the image sensor may perform the first operation based on a third readout operation period which is longer than or equal to the second readout operation period, and may perform the second operation based on the third readout operation period.

According to an embodiment, a method for operating an electronic device including an image sensor may include an operation of selecting any one of a first readout mode, a second readout mode, or a multi-frame capturing mode. The method may include an operation of, when the first readout mode is selected, reading out a pixel value through a first sampling operation for a first readout operation period. The method may include an operation of, when the second readout mode is selected, reading out a pixel value through a second sampling operation for a second readout operation period which is longer than the first readout operation period. The method may include an operation of, when the multi-frame capturing mode is selected, performing a multi-frame capturing operation to read out a first image frame and a second image frame. The multi-frame capturing operation may include a first operation to read out a pixel value of the first image frame based on the first sampling operation for a third readout operation period which is longer than or equal to the second readout operation period. The multi-frame capturing operation may include a second operation to read out a pixel value of the second image frame based on the second sampling operation for the third readout operation period.

A computer-readable non-transitory recording medium according to an embodiment may have a computer program recorded thereon to execute the above-described method when an electronic device including an image senor executes the method.

### [Brief Description of Drawings]

FIG. 1 is a block diagram illustrating an electronic device in a network environment according to various embodiments.
FIG. 2 is a block diagram illustrating the camera module according to various embodiments.
FIG. 3 is a block diagram illustrating an example of an image sensor according to an embodiment.
FIG. 4 is a view illustrating an example of a circuit constituting a pixel included in an image sensor according to an embodiment.
FIG. 5 is a view illustrating an example of an operation signal indicating that an image sensor according to an embodiment performs a reset operation of resetting a pixel, and an example of an operation signal indicating that that the image sensor performs an operation of reading out a pixel value based on a first readout mode.
FIG. 6 is a view illustrating examples of an operation signal indicating that the image sensor according to an embodiment performs an operation of reading out a pixel value based on a second readout mode.
FIG. 7 is a view depicting graphs illustrating an operation of the image sensor reading out a pixel value on a line basis over time.
FIG. 8 is a view illustrating overlapping of a time section in which the image sensor performs a sampling operation to read out a pixel value included in a first line, and a time section of a reset operation signal for resetting a pixel included in a second line.
FIG. 9 is a view illustrating examples of a vertical synchronization signal and a horizontal synchronization signal for the image sensor to read out a first image frame and a second image frame according to an embodiment.
FIG. 10 is a view illustrating examples of a synchronized reset operation, a first operation of reading out a pixel value based on a first readout mode, and a second operation of reading out a pixel value based on a second readout mode according to an embodiment.
FIG. 11 is a flowchart illustrating a process by which an image sensor according to an embodiment reads out a pixel value.
FIG. 12 is a view illustrating a structure in which an image sensor according to an embodiment synthesizes a sampling result sampled based on the second readout mode, and outputs the synthesized sampling result.
FIG. 13 is a view illustrating a structure in which an image sensor according to an embodiment selectively outputs a sampling result sampled based on the second readout mode.
FIG. 14 is a view illustrating an operation signal for an image sensor according to an embodiment to capture an image based on a staggered high dynamic range capturing mode.

### [Mode for the Invention]

Hereinafter, embodiments will be described in detail with reference to the accompanying drawings so that a person skilled in the various embodiments of the disclosure can easily embody. However, the disclosed embodiments may be implemented in different forms and are not limited to the embodiments set forth herein.

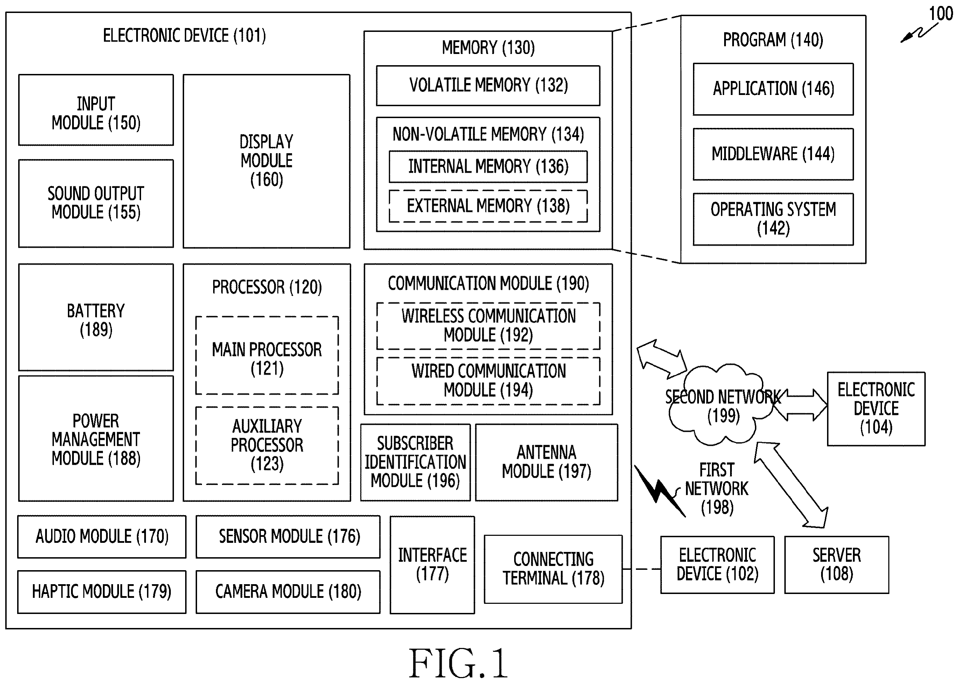

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

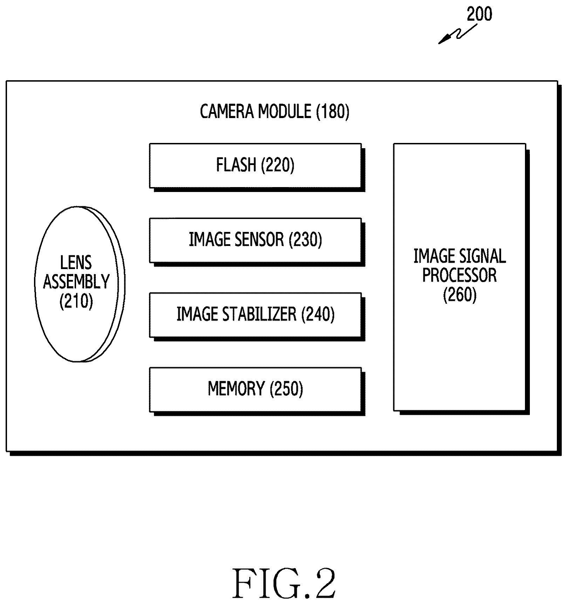

FIG. 2 is a block diagram 200 illustrating the camera module 180 according to various embodiments. Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

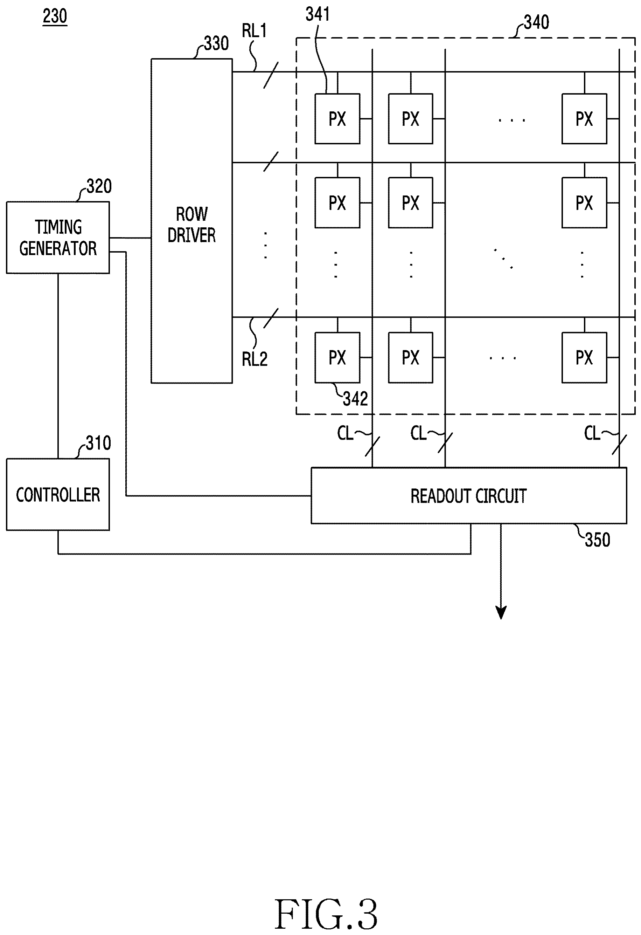

FIG. 3 is a block diagram illustrating an example of the image sensor 230 according to an embodiment.

Referring to FIG. 3, the image sensor 230 according to an embodiment may include a controller 310, a timing generator 320, a row driver 330, a pixel array 340, and a readout circuit 350. In an embodiment, at least a part of an image signal processor (for example, the image signal processor 260 of FIG. 2) may be implemented in the image sensor 230. The image signal processor (for example, the image signal processor 260 of FIG. 2) may be configured as a separate component independent from the image sensor 230.

In an embodiment, the image sensor 230 may generate an image signal by converting light received at the pixel array 340 into an electric signal. The image signal may be provided to the image signal processor (for example, the image signal processor 260 of FIG. 2). The image signal may be temporarily stored in a data buffer (for example, the memory 250 of FIG. 2) before being provided to the image signal processor (for example, the image signal processor 260 of FIG. 2).

In an embodiment, the image sensor 230 may be mounted in an electronic device having a light sensing function. For example, the image sensor 230 may be included in the camera module 180 of the electronic device 101.

In an embodiment, the controller 310 may control at least a part of the components 320, 330, 340, 350 included in the image sensor 230. The controller 310 may control operating time of the components 320, 330, 340, 350 by using a control signal. For example, the controller 310 may adjust a reference signal for operations of the image sensor 230, or may adjust a floating diffusion (FD) capacitance included in a pixel circuit in the pixel array 340 through the row driver 330 by controlling the timing generator 320.

In an embodiment, the controller 310 may receive a mode signal indicating a capturing mode from an application processor (for example, the main processor 121 of FIG. 1). The controller 310 may control the image sensor 230 based on the received mode signal. For example, the application processor (for example, the main processor 121 of FIG. 1) may transmit a mode signal according to an imaging mode to the controller 310. The controller 310 may control a circuit included in the pixel array 340 to output a pixel signal indicating a pixel value related to each of the plurality of pixels included in the pixel array 340, or a pixel signal related to a part of the plurality of pixels. For example, when the mode signal indicates a first mode, the controller 310 may control the pixel array 340 to output a pixel signal based on a first readout mode. For example, when the mode signal indicates a second mode, the controller 310 may control the pixel array 340 to output a pixel signal based on a second readout mode. For example, when the mode signal indicates a multi-frame capturing mode, the controller may control the pixel array 340 to output a pixel signal according to a multi-frame capturing operation including an operation of outputting a pixel signal on a first image frame based on the first readout mode, and an operation of outputting a pixel signal on a second image frame based on the second readout mode.

In the disclosure, the respective readout modes may indicate that sampling methods for detecting pixel values are different from one another. For example, when a pixel value is read out based on the first readout mode, one reset sampling operation and one signal sampling operation may be performed, and, when a pixel value is read out based on the second readout mode, two reset sampling operations and two signal sampling operations may be performed. Accordingly, a minimum operation time that is required to perform a readout operation of reading out a pixel value based on the first readout mode may be shorter than a minimum operation time that is required to perform a readout operation of reading out a pixel value based on the second readout mode. For example, when a pixel value is read out based on the first readout mode, the image sensor 230 may perform the readout operation for a first readout operation period, and, when a pixel value is read out based on the second readout mode, the image sensor 230 may perform the readout operation for a second readout operation period which is longer than the first readout operation period.

In an embodiment, the readout circuit 350 may read out a pixel value. The readout circuit 350 may sample a pixel signal received from the pixel array 340 to read out a pixel value. The timing generator 320 may generate a signal that is a temporal reference for components included in the image sensor 230 to operate. A time at which the row driver 330 and the readout circuit 350 operate may be controlled based on a signal generated at the timing generator 320.

In an embodiment, the pixel array 340 may include a plurality of pixels PX, and a plurality of row lines (for example, RL1, RL2) and a plurality of column lines (CL) which are connected to the plurality of pixels PX. For example, the pixel array 340 may include a first pixel 341 connected to a first row line RL1, and a second pixel 342 which is included in a second row line RL2. The image sensor 230 may read out pixel values related to pixels included in the plurality of column lines CL in parallel. For example, the readout circuit 350 may read out pixel values related to pixels connected to one row line (for example, the first row line RL1 or the second row line RL2) in parallel. An operation of reading out pixel values in the unit of a single line in the disclosure may be referred to as one readout operation. The pixels PX may include at least one light receiving element. The light receiving element may convert incident light into an electric signal according to a quantity of light, that is, a plurality of analogue pixel signals. The level of an analogue pixel signal outputted from the light receiving element may increase according to an amount of electric charge outputted from the light receiving element. Accordingly, the level of an analogue pixel signal outputted from the light receiving element may increase according to a quantity of light received at a corresponding pixel.

In an embodiment, the pixel array 340 may adjust a conversion gain in a process of generating analogue pixel signals. The conversion gain may refer to a magnitude of an analogue pixel signal outputted from the pixel array 340 relative to unit photocharge generated by photoelectric transformation. The conversion gain may be adjusted by changing a floating diffusion capacitance by operating at least one transistor included in the pixel array 340.

In an embodiment, the row lines (for example, RL1, RL2) may be connected to a plurality of pixels including the first pixel 341 arranged along a first direction. The row driver 330 may transmit an operation signal to an element (for example, a transistor) included in the first pixel 341 connected through the first row line RL1. The row driver 330 may transmit an operation signal to an element included in the second pixel 342 connected through the second row line RL2. The column lines CL may be arranged in a second direction that intersects the first direction. The column lines CL may be connected to the pixels that are arranged in the second direction. Pixels connected to one column line CL may be arranged in the second direction. The column lines CL may transmit pixel signals outputted from the pixels that are operated by a row line among the pixels PX to the readout circuit 350. In an embodiment, one pixel included in the pixel array 340 may include a plurality of sub pixel groups, but is not limited thereto.

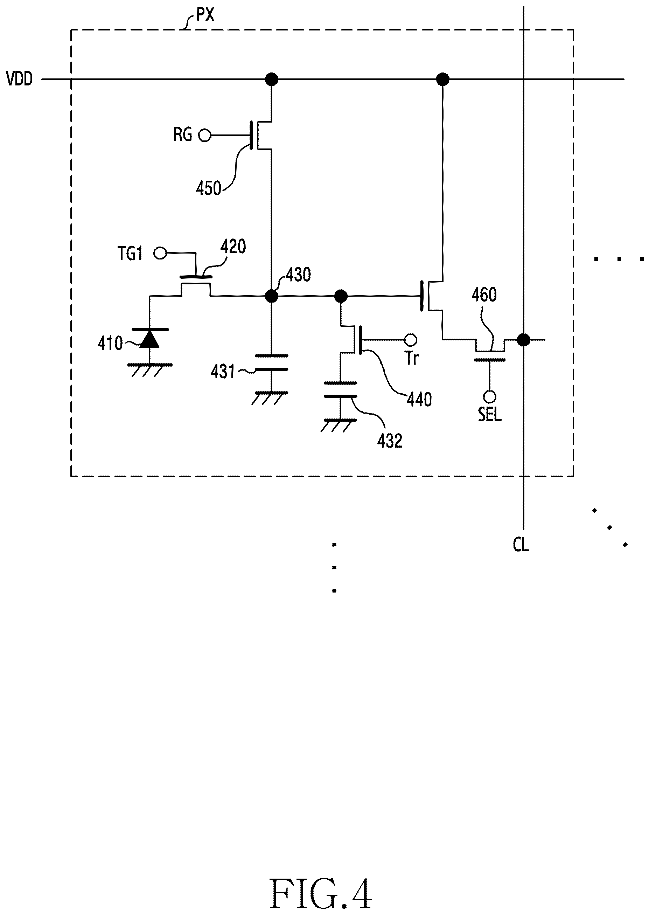

In an embodiment, the row driver 330 may generate an operation signal for driving the pixel array 340 in response to a control signal of the timing generator 320. The row driver 330 may transmit the generated operation signal to at least a part of the plurality of pixels PX. The row driver 330 may control the plurality of pixels PX to perform an operation of detecting light in the unit of a row line. The unit of the row line may include at least one row line (for example, RL1 or RL2). For example, the row driver 330 may transmit, to the pixel array 340, a selection signal (for example, a selection signal SEL of FIG. 4), a reset signal (for example, a reset signal RG of FIG. 4), a transmission signal (for example, a transmission signal TG1 of FIG. 4), and a gain control signal (for example, a gain control signal Tr of FIG. 4).

In an embodiment, the readout circuit 350 may convert a pixel signal (for example, an electrical signal) that is outputted from a pixel (for example, the first pixel 341) connected to a selected row line (for example, the first row line RL1) among the plurality of pixels PX into a pixel value indicating a quantity of light in response to a control signal from the timing generator 320. The readout circuit 350 may convert pixel signals outputted through the respective column lines CL into pixel values, respectively. Pixel values having at least one bit may constitute an image frame. The readout circuit 350 may include, for example, at least one of a selector, a comparator, and a counter circuit. An output from the readout circuit 350 may be transmitted to the image signal processor (for example, the image signal processor 260 of FIG. 2). The output from the readout circuit 350 may be temporarily stored in the data buffer before being transmitted to the image signal processor (for example, the image signal processor 260 of FIG. 2).

FIG. 4 is a view illustrating an example of a circuit constituting a pixel PX included in the image sensor 230 according to an embodiment.

FIG. 4 only illustrates an example of a configuration of a pixel for understanding of an embodiment, and the configuration of a pixel included in the image sensor 230 according to an embodiment is not limited to the example shown in FIG. 4. For example, FIG. 4 illustrates a structure in which one light receiving element 410 (for example, a photo diode) included in the pixel PX is connected to one node 430, but light receiving elements included in a plurality of pixels (for example, four pixels) may be connected to one floating node. Each of the plurality of pixels PX included in the pixel array 340 of FIG. 3 may include at least a part (for example, the light receiving element 410) of the circuit illustrated in FIG. 4.

In an embodiment, the light receiving element 410 may be connected to the node 430 through a first transistor 420. The first transistor 420 may perform a function of a switch to electrically connect the light receiving element 410 to the floating node 430 or block the connection according to a transmission signal TG1. The node 430 may further include a second transistor 450 to reset the node 430 connected to the light receiving element 410 according to a reset signal RG. The second transistor 450 may perform a switch role of controlling electrical connection between the node 430 and a reference voltage VDD. When a switch configured by the second transistor 450 is closed by the reset signal RG, the voltage of the node 430 may become equal to the reference voltage VDD. Thereafter, when the switch configured by the first transistor 420 is closed with the switch configured by the second transistor 450 being opened, a current generated by the light receiving element 410 may flow such that electric charge is accumulated in a first floating diffusion capacitor 431 (or the first floating diffusion capacitor 431 and a second floating diffusion capacitor 432). The voltage of the node 430 may be reduced due to electric charge accumulated in the first floating diffusion capacitor 431 (or the first floating diffusion capacitor 431 and the second floating diffusion capacitor 432).

In an embodiment, the first floating diffusion capacitor 431 may be connected to the node 430. The second floating diffusion capacitor 432 may be connected to the node 430 through a third transistor 440. The third transistor 440 may constitute a switch to control connection between the second floating diffusion capacitor 432 and the node 430 based on a gain control signal Tr. The image sensor 230 may adjust a floating diffusion capacitance by controlling connection between the second floating diffusion capacitor 432 and the node 430.

In an embodiment, a fourth transistor 460 may be connected to a column line CL (for example, the column line CL of FIG. 3). When a pixel PX (for example, the first pixel 341 of FIG. 3) is selected by the row driver 330, the fourth transistor 460 may transmit a pixel signal to a column line CL based on a selection signal SEL received through a row line (for example, the first row line RL1 of FIG. 3). As the voltage of the node 430 is reduced due to electric charge accumulated in the first floating diffusion capacitor 431 (or the first floating diffusion capacitor 431 and the second floating diffusion capacitor 432), the voltage transmitted to the column line CL may change. The voltage transmitted to the column line CL may be transmitted to the readout circuit 350 as a pixel signal. The readout circuit 350 may read out a pixel value based on a degree of change of the voltage transmitted through the column line CL from a reference value (for example, the reference voltage VDD).

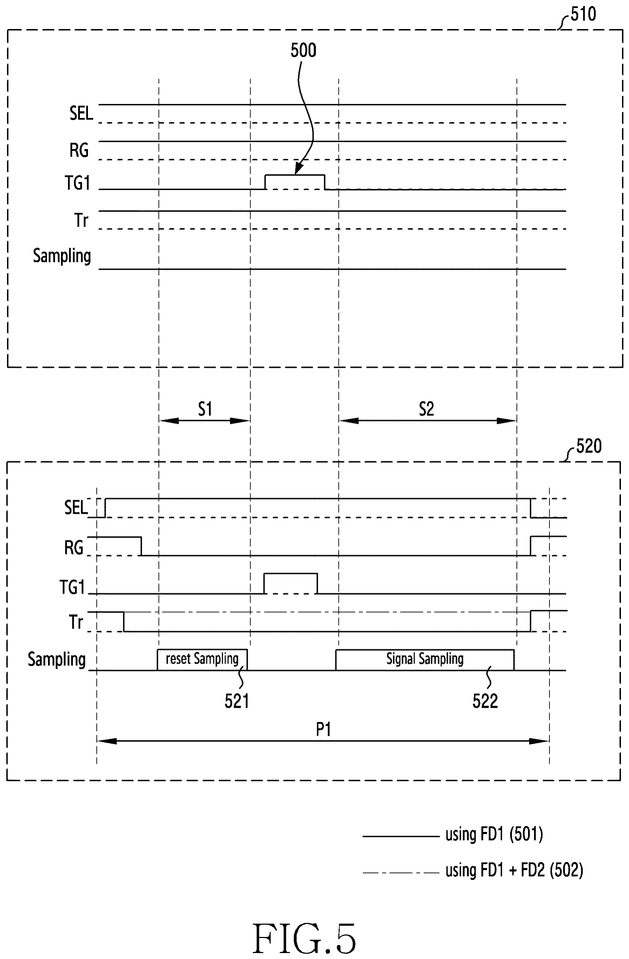

FIG. 5 is a view illustrating an example of an operation signal indicating that the image sensor 230 according to an embodiment performs a reset operation 510 of resetting a pixel PX, and an example of an operation signal indicating that the image sensor performs a first readout operation 520 of reading out a pixel value based on a first readout mode.

The image sensor 230 according to an embodiment may transmit the operation signal according to the reset operation 510 of resetting a pixel PX to the pixel. The reset operation 510 may include an operation of transmitting a shutter pulse 500 (or a shutter signal) as a transmission signal TG1 when the reset signal RG is in an on-state.

The image sensor 230 according to an embodiment may perform an exposure operation of exposing a light receiving element (for example, the light receiving element 410 of FIG. 4) of a pixel PX to light for an exposure time after resetting the pixel PX. After the exposure time elapses, the image sensor 230 may perform an operation of reading out a pixel value.

In an embodiment, the image sensor 230 may perform an operation of reading out a pixel value based on a readout mode that is selected from a plurality of readout modes. For example, when a camera module (for example, the camera module 180 of FIGS. 1 and 2) included in an electronic device (for example, the electronic device 101 of FIG. 1) captures based on a single frame with low performance, the image sensor 230 may perform a readout operation of reading out a pixel value based on the first readout mode.

In an embodiment, the first readout operation 520 may include an operation of reading out a pixel value based on correlated double sampling (CDS). The first readout operation 520 illustrated in the first readout operation 520 may be referred to as normal correlated double sampling. The correlated double sampling may include a reset sampling operation 521 and a signal sampling operation 522. The reset sampling operation 521 may include an operation of sampling in a reset state during a first sampling section S1 before electric charge generated by the light receiving element 410 by the transmission signal TG1 is accumulated in the first floating diffusion capacitor 431. The signal sampling operation 522 may include an operation of sampling during a second sampling section S2 after electric charge generated by the light receiving element 410 by the transmission signal TG1 is accumulated in the first floating diffusion capacitor 431. The sampling operations 521, 522 may be performed by using the first floating diffusion capacitor 431 (501). The sampling operations 521, 522 may be performed by using the first floating diffusion capacitor 431 and the second floating diffusion capacitor 432 (502). For example, when one or more light receiving elements including the light receiving element 410 are connected to the node 430 and a signal acquired from the one or more light receiving elements is small (illuminance is low), the image sensor 230 may set the gain control signal Tr to be in an off-state and may perform sampling using the first floating diffusion capacitor 431. When the signal acquired from the one or more light receiving elements is large (illuminance is high), the image sensor 230 may set the gain control signal Tr to be in an on-state and may perform sampling by using the first floating diffusion capacitor 431 and the second floating diffusion capacitor 432. The first readout operation 520 may be performed for a first readout operation period P1.

In an embodiment, for the first readout operation period P1 for which one pixel (for example, the second pixel 342 of FIG. 3) performs the first readout operation 520, another pixel (for example, the first pixel 341 of FIG. 3) connected to the same column line CL may perform at least a part of the reset operation 500. For example, when the image sensor 230 captures a plurality of image frames continuously, while one pixel (for example, the second pixel 342 of FIG. 3) is performing the first readout operation 520 to read out a pixel value on the first image frame, another pixel (for example, the first pixel 341 of FIG. 3) may perform the reset operation 510 to perform a capturing operation on the second image frame. When a shutter pulse for another pixel (for example, the first pixel 341 of FIG. 3) occurs while a pixel (for example, the second pixel 342 of FIG. 3) connected to the same column line CL is performing sampling operations 521, 522, a noise may occur in a sampling result. The image sensor 230 according to an embodiment may transmit the shutter pulse 500 to the pixel circuit in a section except for the sampling sections S1, S2 in which another pixel connected to the same column line CL as the pixel performing the reset operation 510 performs sampling.

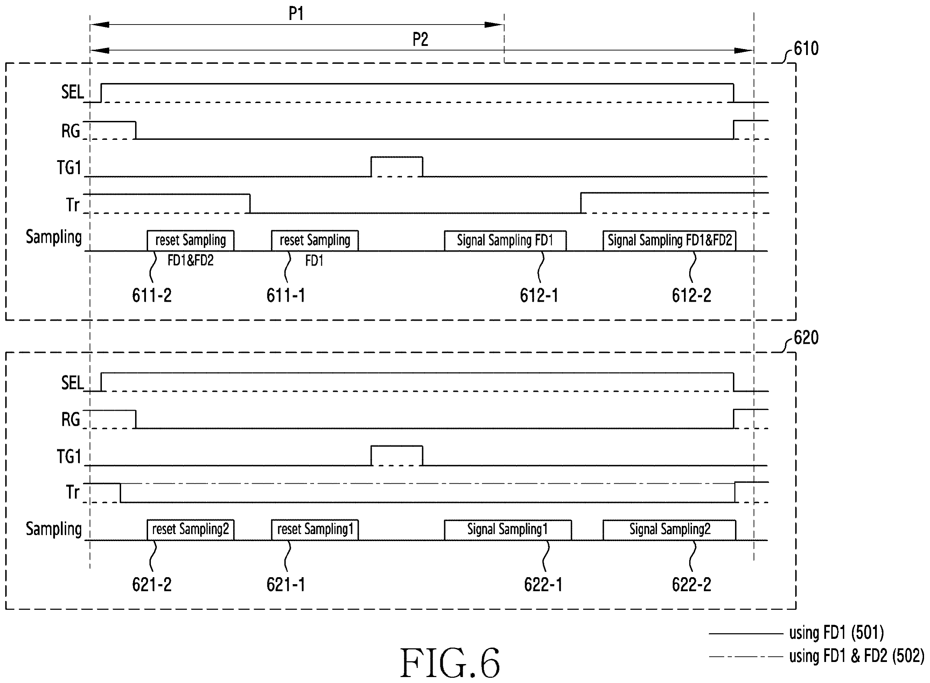

FIG. 6 is a view illustrating examples of operation signals indicating that the image sensor 230 according to an embodiment performs an operation of reading out a pixel value based on the second readout mode.

In an embodiment, the image sensor 230 may read out a pixel value based on the second readout mode in which pixel values are read out based on a second readout operation period P2 which is longer than the first readout operation period P1. For example, a second readout operation 610 may include an operation of reading out a pixel value based on double conversion gain (DCG) CDS. For example, a third readout operation 620 may include an operation of reading out a pixel value based on low noise multi-sampling CDS.

In an embodiment, the image sensor 230 may acquire a high dynamic range (HDR) image which has a dynamic range extended by performing a multi-frame capturing operation of capturing a plurality of images captured based on different readout modes. For example, the image sensor 230 may acquire the high dynamic range image by synthesizing images that are acquired based on bracketing capturing which captures a plurality of images based on different sampling methods.

The double conversion gain CDS may include two reset sampling operations 611-1, 611-2, and two signal sampling operations 612-1, 612-2. The first reset sampling operation 611-1 may be performed in a reset state before electric charge generated by the light receiving element 410 by the transmission signal TG1 is accumulated in the first floating diffusion capacitor 431 in a state where the second floating diffusion capacitor 432 is not connected to the node 430. The second reset sampling operation 611-2 may be performed in a reset state before electric charge generated by the light receiving element 410 by the transmission signal TG1 is accumulated in the first floating diffusion capacitor 431 and the second floating diffusion capacitor 432 in a state where the second floating diffusion capacitor 432 is connected to the node 430. The first signal sampling operation 612-1 may be performed after electric charge generated by the light receiving element 410 by the transmission signal TG1 is accumulated in the first floating diffusion capacitor 431 in the state where the second floating diffusion capacitor 432 is not connected to the node 430. The second signal sampling operation 612-2 may be performed after electric charge generated by the light receiving element 410 by the transmission signal TG1 is accumulated in the first floating diffusion capacitor 431 and the second floating diffusion capacitor 432 in the state where the second floating diffusion capacitor 432 is connected to the node 430.

The low noise multi sampling CDS may include two reset sampling operations 621-1, 621-2 and two signal sampling operations 622-1, 622-2. The reset sampling operations 621-1, 621-2 may include an operation of sampling in a reset state before electric charge generated by the light receiving element 410 by the transmission signal TG1 is accumulated in the first floating diffusion capacitor 431 (or the first floating diffusion capacitor 431 and the second floating diffusion capacitor 432). The signal sampling operations 622-1, 622-2 may include an operation of sampling after electric charge generated by the light receiving element 410 by the transmission signal TG1 is accumulated in the first floating diffusion capacitor 431 (or the first floating diffusion capacitor 431 and the second floating diffusion capacitor 432). The sampling operations 621-1, 621-2, 622-1, 622-2 may be performed by using the first floating diffusion capacitor 431 (501). The sampling operations 621-1, 621-2, 622-1, 622-2 may be performed by using the first floating diffusion capacitor 431 and the second floating diffusion capacitor 432 (502).

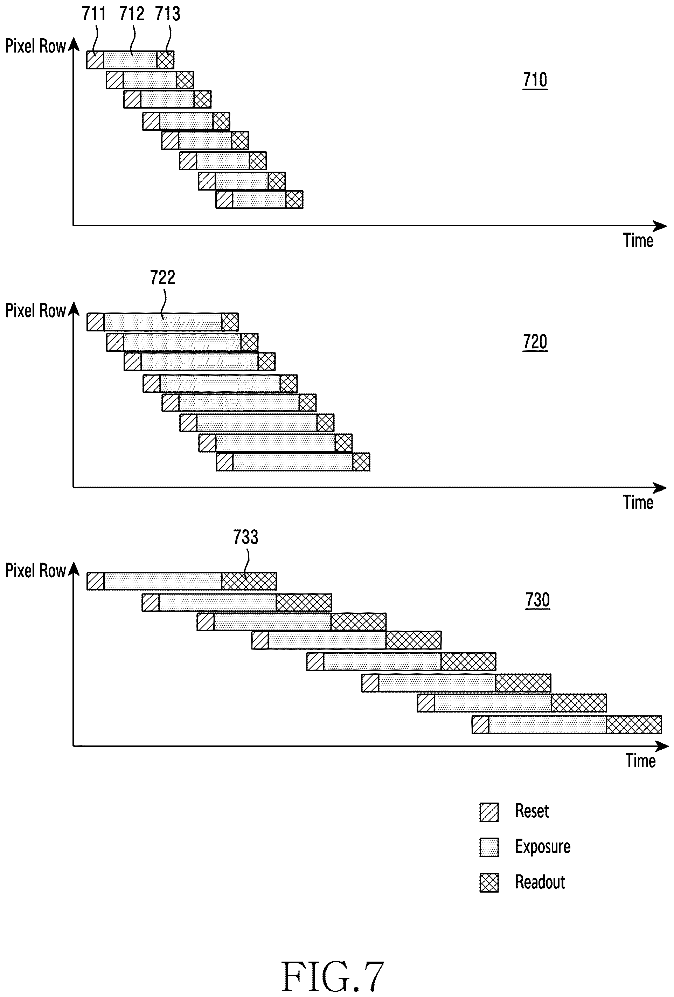

FIG. 7 shows graphs illustrating an operation of the image sensor 230 reading out a pixel value on a line basis according to an embodiment.

In an embodiment, the first graph 710 shows an operation of the image sensor 230 reading out pixel values to be included in an image frame based on a first exposure time and the first readout mode. The image sensor 230 according to an embodiment may perform a reset operation 711 of resetting pixels of a row line for reading out pixel values. The image sensor 230 may perform an exposure operation 712 on the reset pixels of the row line for the first exposure time. The image sensor 230 may perform a first readout operation 713 on the pixels of the corresponding row line after the first exposure time elapses. The image sensor 230 may perform a reset operation and an exposure operation on the next row in sequence in order to perform a readout operation on the next row when the first readout operation 712 is terminated.

In an embodiment, the second graph 720 may indicate an operation of reading out pixel values to be included in an image frame based on a second exposure time which is longer than the first exposure time, and the first readout mode. The image sensor 230 according to an embodiment may perform a readout operation after performing an exposure operation 722 for the second exposure time.

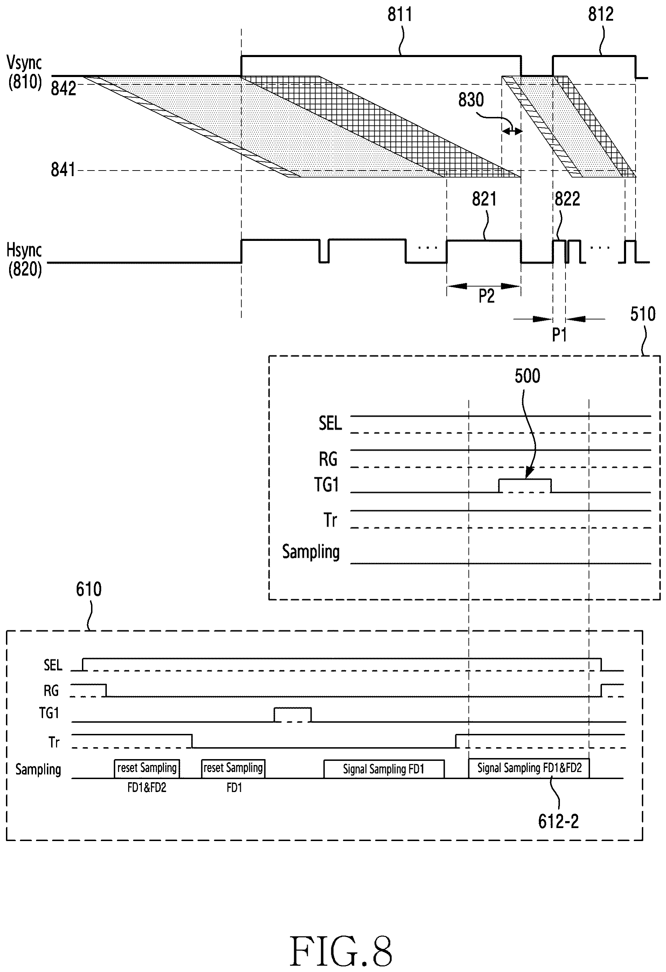

In an embodiment, the third graph 730 may indicate an operation of reading out pixel values to be included in an image frame based on the second readout mode which has a longer readout operation period than the first readout mode. The image sensor 230 according to an embodiment may have an interval between a time at which a reset operation on one row line is performed and a time at which a reset operation on the next row line is performed that is longer than in the case shown in the first graph 710 and the second graph 720, such that the readout operation on the pixels included in the second row line is performed after the second readout operation 733 on the pixels included in the first row line is terminated. For example, referring to FIG. 8, the slope of a parallelogram expressing image capturing operations of respective row lines may change. Accordingly, if the starting time of a reset operation is not delayed after the operation of capturing the next image frame starts, a reset operation on other rows may be performed while the readout operation on one row is being performed. In this case, it may be difficult to synchronize not to overlap a time of a sampling operation of a readout operation and a shutter operation time of a reset operation.

FIG. 8 illustrates overlapping between a time section in which the image sensor 230 performs a sampling operation for reading out a pixel value included in a first line (for example, line 841), and a time section of a reset operation signal for resetting a pixel included in a second line (for example, line 842).

In an embodiment, the image sensor 230 may control an operation of reading out pixel values included in an image frame based on a vertical synchronization signal 810. When the image sensor 230 performs a multi-frame capturing operation, the vertical synchronization signal 810 may include a first section 811 to output a first image frame, and a second section 812 to output a second image frame. For example, the first section 811 may be a section in which the first image frame is read out based on a readout operation (for example, the second readout operation 610 or the third readout operation 620 of FIG. 6) according to the second readout mode. For example, the second section 812 may be a section in which the second image frame is read out based on a readout operation (for example, the first readout operation 520 of FIG. 5) according to the first readout mode.

In the disclosure, the "vertical synchronization signal" may refer to a signal that allows a readout operation to be performed for a period in which the signal is high, and does not allow a readout operation to be performed to determine a frame rate while a signal is low. For example, the "vertical synchronization signal" may indicate a time section in which a single image frame is read out. In the disclosure, the "horizontal synchronization signal" may refer to a signal that is used as a reference of a time at which a readout operation is performed on a line basis.

In an embodiment, the image sensor 230 may control an operation of reading out a pixel value on a line basis based on a horizontal synchronization signal 820. For example, the image sensor 230 may perform the second readout operation 610 on a row line (for example, the second row line RL2 of FIG. 3) during a third section 821 corresponding to the second readout operation period P2 within the first section 811. The image sensor 230 may perform the first readout operation 520 on another row line (for example, the first row line RL1 of FIG. 3) during a fourth section 822 corresponding to the first readout operating period P1 within the second section 812. While the second readout operation 610 is being performed in the third section 821, a fifth section 830 in which the reset operation 510 for capturing an image in the second section 812 is performed on another row line may occur.

In an embodiment, since the third section 821 and the fourth section 822 have different lengths, the shutter pulse 500 included in the reset operation 510 may occur during the fifth section 830 while sampling (for example, the second signal sampling operation 612-2) is being performed within the second readout operation 610. Accordingly, the capturing operation of the second section 812 to output the second image frame should be delayed as long as the fifth section 830, such that the shutter pulse does not occur while the sampling operation of another line is being performed when the interval of the horizontal synchronization signal 820 in the second section 812 is the first readout operation period P1.

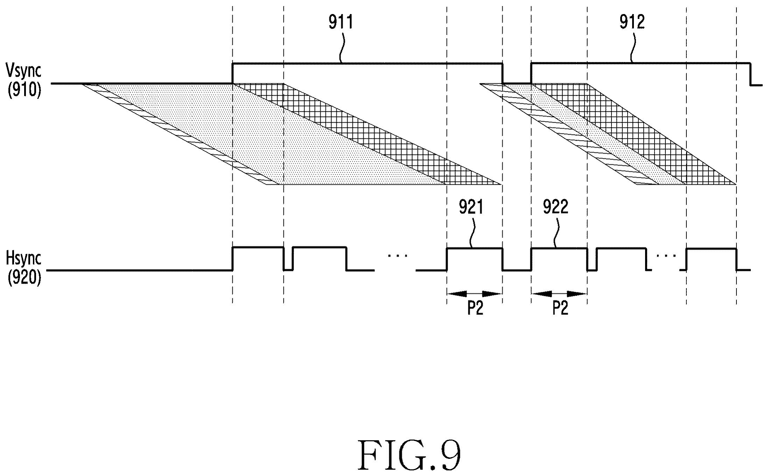

FIG. 9 illustrates examples of a vertical synchronization signal 910 and a horizontal synchronization signal 920 for reading out a first image frame and a second image frame by the image sensor 230 according to an embodiment.

In an embodiment, the image sensor 230 may control the pixel array 340 based on the vertical synchronization signal 910 which includes a first section 911 for reading out a first image frame and a second section 912 for reading out a second image frame. The image sensor 230 may read out the first image frame based on the second readout mode, and may read out the second image frame based on the first readout mode.

In an embodiment, the first readout mode may be a readout mode that is performed based on the first readout operation period P1, and the second readout mode may be a readout mode that is performed based on the second readout operation period P2 which is longer than the first readout operation period P1. When performgin a multi-frame capturing operation is performed, the image sensor 230 may synchronize an interval between a first horizontal synchronization signal 921 on the first section 911, and a second horizontal synchronization signal 922 on the second section 912 with the second readout operation period P2. When the readout operation period on the row line basis is constant, by preventing the section in which the shutter pulse 500 occurs within the reset operation from overlapping a section in which sampling is performed in the readout operations, the shutter pulse 500 does not occur while sampling is being performed in other lines even if the readout operations are repeated.

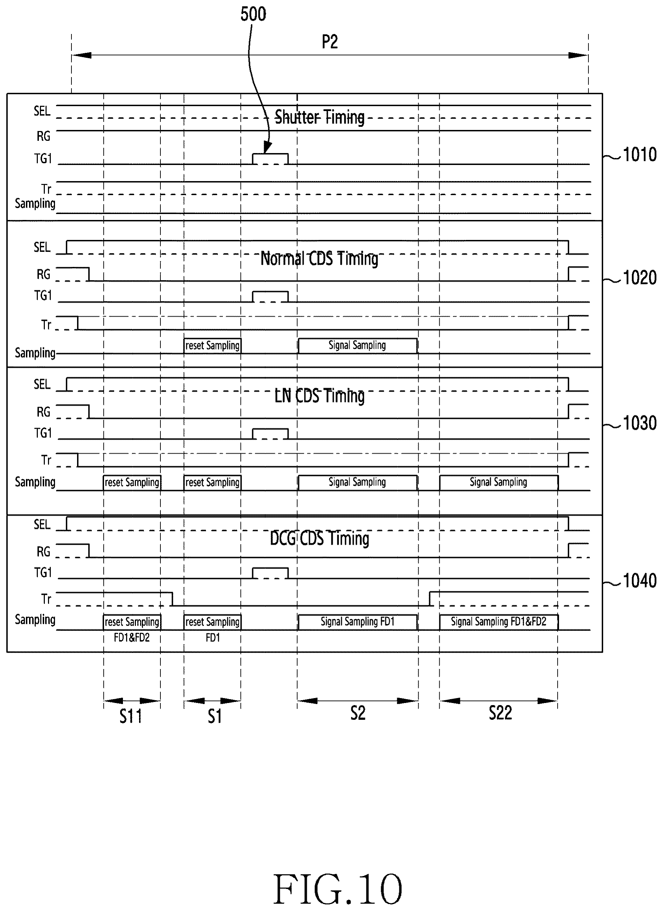

FIG. 10 is a view illustrating examples of a synchronized reset operation 1010, a first operation 1020 of reading out a pixel value based on the first readout mode, and a second operation 1030 or 1040 of reading out a pixel value based on the second readout mode according to an embodiment.

In an embodiment, when performing a multi-frame capturing operation is performed to capture an image based on a multi-frame capturing mode, the image sensor 230 may synchronize the reset operation 1010 (for example, the reset operation 510 of FIG. 5), the first operation 1020 (for example, the first readout operation 520 of FIG. 5), and the second operation 1030 or 1040 (for example, the second readout operation 610 or the third readout operation 620 of FIG. 6). The image sensor 230 may increase a first readout operation period of the first operation 1020 in order to synchronize the readout operation periods of the readout operations. The above operations 1010, 1020, 1030, 1040 may be synchronized based on the longest operation period (for example, the second readout operation period P2) among the operation periods that are required to perform the above operations 1010, 1020, 1030, 1040. In an embodiment, since the length of a horizontal synchronization signal corresponds to the period of the readout operation, the image sensor 230 may synchronize the length of the horizontal synchronization signal with the longest length of the lengths of the horizontal synchronization signals of the plurality of operation modes on the plurality of readout operations.

In an embodiment, when the first operation 1020 is performed to read out a pixel value based on the first readout mode during the multi-frame capturing operation, the image sensor 230 may perform a sampling operation during a first section S1 and a second section S2 within a synchronized operation period (for example, the second readout operation period P2). When the second operation 1030 or 1040 is performed to read out a pixel value based on the second readout mode during the multi-frame capturing operation, the image sensor 230 may perform a sampling operation during the first section S1, the second section S2, a third section S11 and a fourth section S22 within the synchronized operation period P2. When the reset operation 1010 is performed during the multi-frame capturing operation, the image sensor 230 may transmit the shutter pulse 500 to a specific row line within the pixel array 340 within a section except for the first section S1, the second section S2, the third section S11, and the fourth section S22 within the synchronized operation period (for example, the second readout operation period P2). However, setting the operation period related to performance of the readout operation to the second readout operation period P2 is to synchronize lengths of the operation periods, but is not limited thereto. For example, the image sensor 230 may perform the first operation 1020 and the second operation 1030 or 1040 based on a third readout operation period which is longer than or equal to the second readout operation period P2.

In an embodiment, the reset operation 1010, the first operation 1020 or the second operation 1030 or 1040 may be controlled to be performed based on a horizontal synchronization signal (for example, the horizontal synchronization signal 920 of FIG. 9) corresponding to the synchronized operation period P2.

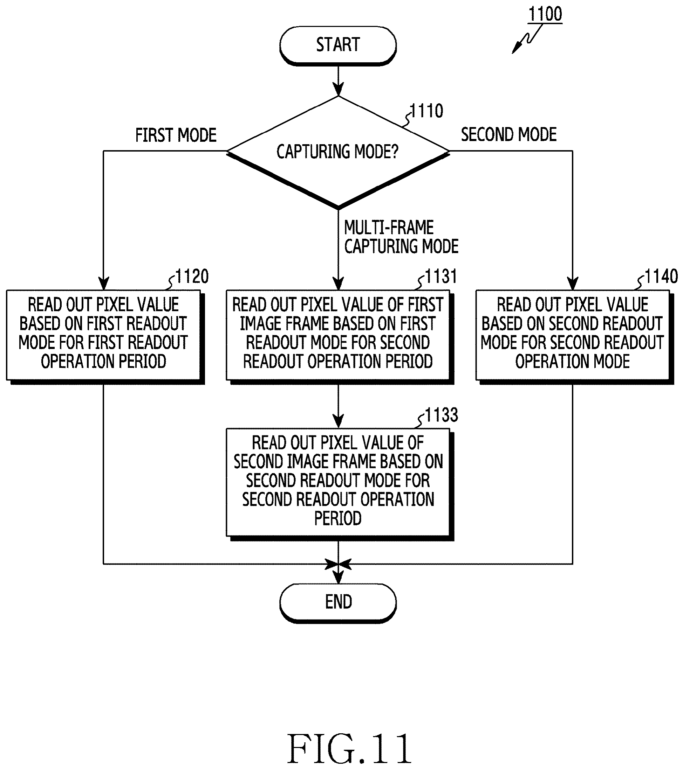

FIG. 11 is a flowchart 1100 illustrating a process of reading out a pixel value by the image sensor 230 according to an embodiment.

According to an embodiment, in action 1110, the image sensor 230 included in the electronic device 101 may determine a capturing mode to capture an image. For example, when a user input for capturing an image is received, the electronic device 101 may identify a capturing mode set for capturing an image. The electronic device 101 may determine which readout mode the image sensor 230 will use to acquire image data according to a capturing mode for capturing an image.

According to an embodiment, when the capturing mode for capturing an image is a first mode, the image sensor 230 may read out a pixel value based on the first readout mode. In action 1120, the image sensor 230 may perform an operation of reading out a pixel value based on the first readout mode for a first readout operation period. For example, the image sensor 230 may perform the readout operation (for example, the first readout operation 520 of FIG. 5) illustrated in FIG. 5 for the first readout operation period (for example, P1 of FIG. 5). The image sensor 230 may control a period for which pixels connected to a specific line within the pixel array 340 perform the readout operation based on a horizontal synchronization signal corresponding to the first readout operation period.

According to an embodiment, when the capturing mode for capturing an image is a second mode, the image sensor 230 may read out a pixel value based on the second readout mode. In action 1140, the image sensor 230 may perform an operation of reading out a pixel value based on the second readout mode for a second readout operation period. For example, the image sensor 230 may perform the readout operation shown in FIG. 6 (for example, the second readout operation 610 or the third readout operation 620 of FIG. 6) for the second readout operation period (for example, P2 of FIG. 6). The image sensor 230 may control a period for which pixels connected to a specific line within the pixel array 340 perform the readout operation based on a horizontal synchronization signal corresponding to the second readout operation period. The second readout operation period may be longer than the first readout operation period.

In an embodiment, when the capturing mode for capturing an image is a multi-frame capturing mode, the image sensor 230 may determine a readout mode for capturing a plurality of image frames. The image sensor 230 may read out pixel values included in image frames based on a plurality of different readout modes. For example, the image sensor 230 may read out pixel values with respect to a first image frame based on the first readout mode, and may read out pixel values with respect to a second image frame based on the second readout mode. The electronic device 101 may determine a period to be applied to a readout operation for the plurality of image frames, based on readout operation periods required for the plurality of readout modes. For example, the image sensor 230 may perform the readout operation with respect to the plurality of image frames, based on the longest readout operation period among the readout operation periods according to used readout modes. However, the synchronized operation period is not limited to the above-described example. When a readout operation is performed with respect to a plurality of image frames based on the first readout mode and the second readout mode, the image sensor 230 may perform the readout operation with respect to the respective image fames based on the second readout operation period.

According to an embodiment, in action 1131, the image sensor 230 may read out pixel values of the first image frame based on the first readout mode for the second readout period. In action 1133, the image sensor 230 may read out pixel values of the second image frame based on the second readout mode for the second readout period. In action 1133, a reset operation for performing the capturing operation with respect to the second image frame may be performed in parallel with the first readout operation for pixels connected to at least some row lines of the first image frame.

The multi-frame capturing mode may mean that the electronic device 101 performs an operation of acquiring a plurality of image frames through the image sensor 230 and generating an image from the plurality of image frames. For example, the multi-frame capturing mode may include an operation of synthesizing image frames acquired based on different exposure values, and generating a high dynamic range (HDR) image. However, this should not be considered as limiting. For example, the multi-frame capturing mode may include an operation of generating a noise-reduced image by using a plurality of image frames captured based on a plurality of readout modes.

FIG. 11 illustrates that action 1133 is performed after action 1131, but in an embodiment, the order of action 1131 and action 1133 may be changed.

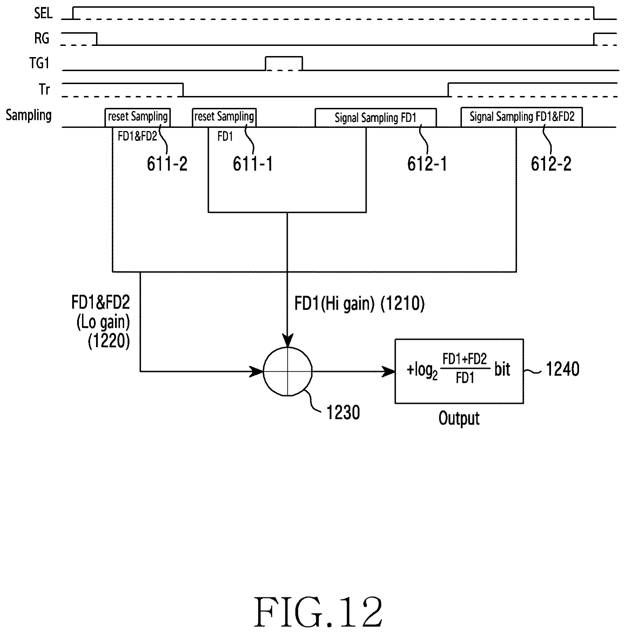

FIG. 12 is a view illustrating a structure in which the image sensor 230 according to an embodiment synthesizes sampling results sampled based on the second readout mode and outputs the sampling result.

In an embodiment, when the image sensor 230 reads out a pixel value based on the second readout mode, the image sensor 230 may acquire a first sampling result 1210 based on a first reset sampling operation 611-1 and a first signal sampling operation 612-1. The first sampling result 1210 may include a result of sampling based on the first floating diffusion capacitor 431 in an off-state of a gain control signal Tr. The image sensor 230 may acquire a second sampling result 1220 based on a second reset sampling operation 611-2 and a second signal sampling operation 612-2. The second sampling result 1220 may include a result of sampling based on the first floating diffusion capacitor 431 and the second floating diffusion capacitor 432 in an on-state of the gain control signal Tr. When the capacitance of the first floating diffusion capacitor 431 is FD1 and the capacitance of the second floating diffusion capacitor 432 is FD2, the second sampling result 1220 may include a signal outputted from the second reset sampling operation 611-2 and the second signal sampling operation 612-2 multiplied by ((FD1+FD2)/FD1).

In an embodiment, the image sensor 230 may include a synthesizer 1230 to synthesize the first sampling result 1210 and the second sampling result 1220. The synthesizer 1230 may output a result value 1230 resulting from synthesization of the first sampling result 1210 and the second sampling result 1220. The outputted result may be extended to a bit bandwidth corresponding to a dynamic range of the first sampling result 1210 and the second sampling result 1220. For example, the result value 1240 may be extended to 2 bits when ((FD1+FD2)/FD1) is 4, and may be extended to 3 bits when ((FD1+FD2)/FD1) is 8.

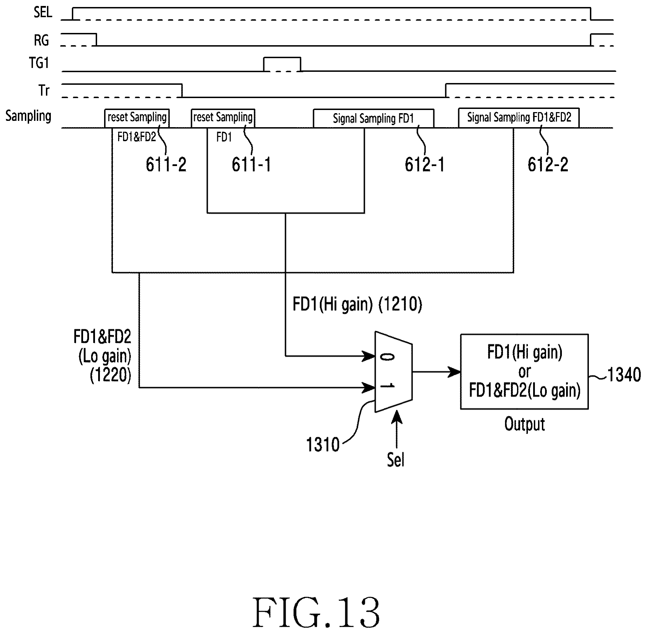

FIG. 13 is a view illustrating a structure in which the image sensor 230 according to an embodiment selectively outputs a sampling result sampled based on the second readout mode.

In an embodiment, when the image sensor 230 reads out a pixel value based on the second readout mode, the image sensor 230 may acquire a first sampling result 1210 based on a first reset sampling operation 611-1 and a first signal sampling operation 612-1. The first sampling result 1210 may include a result of sampling based on the first floating diffusion capacitor 431 in an off-state of the gain control signal Tr. The image sensor 230 may acquire a second sampling result 1220 based on a second reset sampling operation 611-2 and a second signal sampling operation 612-2. The second sampling result 1220 may include a result of sampling based on the first floating diffusion capacitor 431 and the second floating diffusion capacitor 432 in the on-state of the gain control signal Tr.

In an embodiment, the image sensor 230 may further include a selector 1310 configured to selectively output any one of the first sampling result 1210 or the second sampling result 1220. In the multi-frame capturing operation, a sampling result is selectively outputted as an output on at least some frames instead of extending and synthesizing, which increases the number of bits, such that an increase rate of power consumed by the image sensor 230 may be reduced.

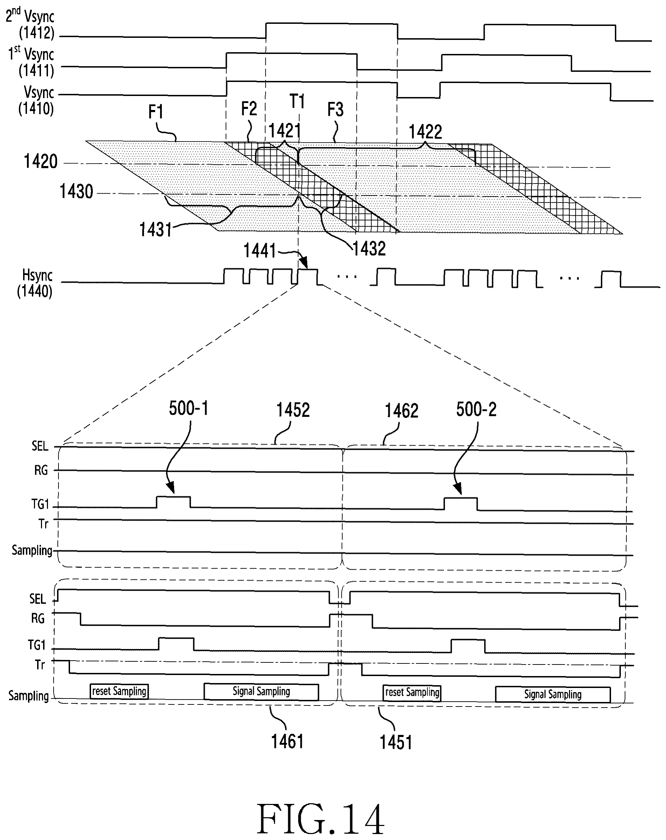

FIG. 14 is a view illustrating an operation signal for the image sensor 230 according to an embodiment to capture an image based on a staggered high dynamic range capturing mode.

FIG. 14 illustrates exposure operations performed to capture respective image frames according to an embodiment. It may be understood that a reset operation is performed before the exposure operation and a readout operation is performed after the exposure operation.

In an embodiment, when the image sensor 230 captures an image based on the staggered high dynamic range capturing mode, a readout operation may be performed with respect to two image frames (for example, a first image frame F1 and a second image frame F2) within a single section (for example, a readout operation section 1441) in which a horizontal synchronization signal 1440 is high. Referring to FIG. 14, a first vertical synchronization signal 1411 for controlling a readout operation time for the first image frame, and a second vertical synchronization signal 1412 for controlling a readout operation time on the second image frame may operate within a vertical synchronization signal 1410.

For example, a first reset operation 1452, a second reset operation 1462, a first readout operation 1461, and a second readout operation 1451 may be performed within a readout operation period 1441 corresponding to a time T1. The second readout operation 1451 may include an operation of reading out pixel values outputted based on an exposure operation performed in a first exposure section 1421 for pixels connected to a first row line 1420 to capture a second frame F2. The first reset operation 1452 may include an operation of resetting pixels connected to the first row line 1420 to perform an exposure operation of a second exposure section 1422 to capture a third frame F3. The first readout operation 1461 may include an operation of reading out pixel values outputted based on an exposure operation performed in a third exposure section 1431 on pixels connected to a second row line 1430 to capture a first frame F1. The second reset operation 1462 may include an operation of resetting pixels connected to the second row line 1430 to perform an exposure operation of a fourth exposure section 1432 to capture the second frame F2. It is illustrated in FIG. 14 that the first readout operation 1461 precedes the second readout operation 1451, but the order of performance of the first readout operation 1461 and the second readout operation 1451 within the readout operation section 1441 may be changed. For example, the second readout operation 1451 may precede the first readout operation 1461 within the readout operation section 1441. Similarly, the second reset operation 1462 may precede the first reset operation 1452 within the readout operation section 1441.

In an embodiment, a first shutter pulse 500-1 occurring in the process of performing the first reset operation 1452 may occur within a section except for a section in which a sampling operation is performed within the first readout operation 1461. A second shutter pulse 500-2 occurring in the process of performing the second reset operation 1462 may occur within a section except for a section in which a sampling operation is performed within the second readout operation 1451.

In an embodiment, the first readout operation 1461 and the second readout operation 1451 illustrated in FIG. 14 are illustrated as operating according to an operation mode based on normal correlated double sampling, but at least one of the first readout operation 1461 or the second readout operation 1451 may be substituted with a readout operation that is performed based on an operation mode of higher performance (for example, DCG CDS, a low-noise multi-sampling CDS) than normal correlated double sampling. Even when at least one of the first readout operation 1461 or the second readout operation 1451 is a readout operation according to a different operation mode, the shutter pulses 500-1, 500-2 occurring in the first reset operation 1452 and the second reset operation 1462 may operate within a section except for a section in which a sampling operation is performed. In this case, intervals of the horizontal synchronization signal 1440 may be maintained consistently during high dynamic range capturing.

Various embodiments of the disclosure may relate to an image sensor for capturing a plurality of image frames, an electronic device including the image sensor and an operating method thereof.

Various embodiments of the disclosure may relate to an image sensor capable of freely setting a light exposure time for performing an operation of capturing a plurality of image frames based on different readout modes, an electronic device including the image sensor, and an operating method thereof.

Various embodiments of the disclosure may relate to an image sensor capable of reducing an increase rate of power consumption according to a readout method, an electronic device including the image sensor, and an operating method thereof.

Various embodiments of the disclosure may relate to a computer-readable recording medium having a computer program recorded thereon to perform the above-described methods.

The technical object to be achieved by the disclosure is not limited to those mentioned above, and other technical objects that are not mentioned above may be clearly understood to those skilled in the art based on the descriptions of the disclosure.

An electronic device according to an embodiment may include a lens unit 210, an image sensor 230 configured to receive light passing through the lens unit 210 and to convert the light into an electrical signal, and at least one processor 120 configured to control the image sensor 230. When an image frame is outputted based on a first readout mode, the image sensor 230 may read out a pixel value based on a first readout operation period P1. When an image frame is outputted based on a second readout mode, the image sensor 230 may read out a pixel value based on a second readout operation period P2 which is longer than the first readout operation period P2. When performing a multi-frame capturing operation including a first operation 510 of outputting a first image frame based on the first readout mode and a second operation 610, 620 of outputting a second image frame based on the second readout mode is performed based on a request of the at least one processor 120, the image sensor 230 may be configured to perform the first operation 510 based on a third readout operation period which is longer than or equal to the second readout operation period P2, and to perform the second operation 610, 620 based on the third readout operation period.

In an embodiment, the first readout mode may include acquiring a pixel value based on normal correlated double sampling (CDS) including one reset sampling operation and one signal sampling operation. The second readout mode may include acquiring a pixel value based on double conversion gain (DCG) CDS including two reset sampling operations and two signal sampling operations.

In an embodiment, the multi-frame capturing operation may include a reset operation of resetting a pixel which is included in a second line different from a first line from which the pixel value is read out, during a section excluding a section 521, 522, 611-1, 611-2, 612-1, 612-2, 621-1, 621-2, 622-1, 622-2 in which sampling is performed in the first operation and the second operation from the third readout operation period.

In an embodiment, the image sensor 230 may include a light receiving element 410 configured to convert the light into an electric signal, and a first switch 420 connected to the light receiving element 410. The reset operation may include transmitting an operation signal for operating the first switch 420 to the first switch 420. The image sensor 230 may be configured to restrict a section in which the operation signal is transmitted to the first switch 420 to a section excluding the section 521, 522, 611-1, 611-2, 612-1, 612-2, 621-1, 621-2, 622-1, 622-2 in which sampling is performed in the first operation and the second operation.

In an embodiment, the second operation may include a first signal sampling operation to acquire a first sampling result 1210 and a second signal sampling operation to acquire a second sampling result 1220. The image sensor may be configured to output the second image frame based on bits that are acquired by synthesizing the first sampling result 1210 and the second sampling result 1220.

In an embodiment, the image sensor may include a plurality of pixels PX. Each of the plurality of pixels PX may include a first capacitor 431 connected to a floating node 430, a second capacitor 432, and a second switch 440 configured to control connection between the second capacitor 432 and the floating node 430. The image sensor 230 may be configured to read out a pixel value based on a first sampling result 1210 which is acquired in a state in which the second switch 440 is opened, and a second sampling result 1220 which is acquired in a state in which the second switch 440 is closed.

In an embodiment, the image sensor 230 may further include a selector configured to selectively output any one of the first sampling result 1210 or the second sampling result 1220.

In an embodiment, the image sensor 230 may output the first image frame based on a first exposure time. The image sensor 230 may output the second image frame based on a second exposure time which is different from the first exposure time. The at least one processor 120 may be configured to acquire image data that has a dynamic range extended by synthesizing the first image frame and the second image frame.

A method for operating an electronic device 101 including an image sensor 230 may include selecting any one of a first readout mode, a second readout mode, or a multi-frame capturing mode. The method may include, when the first readout mode is selected, reading out a pixel value through a first sampling operation for a first readout operation period. The method may include, when the second readout mode is selected, reading out a pixel value through a second sampling operation for a second readout operation period which is longer than the first readout operation period. The method may include, when the multi-frame capturing mode is selected, performing a multi-frame capturing operation to read out a first image frame and a second image frame. The multi-frame capturing operation may include a first operation to read out a pixel value of the first image frame based on the first sampling operation for a third readout operation period which is longer than or equal to the second readout operation period. The multi-frame capturing operation may include a second operation to read out a pixel value of the second image frame based on the second sampling operation for the third readout operation period.

In an embodiment, the first sampling operation may include acquiring a pixel value based on normal CDS including one reset sampling operation and one sampling operation. The second sampling operation may include acquiring a pixel value based on DCG CDS including two reset sampling operations and two signal sampling operations.

In an embodiment, the multi-frame capturing operation may include a reset operation of resetting a pixel which is included in a second line different from a first line from which the pixel value is read out, during a section excluding a section in which sampling is performed in the first operation and the second operation from the third readout operation period.

In an embodiment, each of a plurality of pixels included in the image sensor may include: a light receiving element configured to convert the light into an electric signal; and a switch connected to the light receiving element. The reset operation may include transmitting an operation signal for operating the switch of the pixel included in the second line to the switch. A section in which the operation signal is transmitted to the switch may be within a section except for a section in which sampling is performed based on the first sampling operation, and a section in which sampling is performed based on the second sampling operation within the third readout operation period.

In an embodiment, the second operation may include: a first signal sampling operation to acquire a first sampling result; a second signal sampling operation to acquire a second sampling result; and outputting the second image frame based on bits that are acquired by synthesizing the first sampling result and the second sampling result.

In an embodiment, the image sensor may include a plurality of pixels. Each of the plurality of pixels may include a first capacitor connected to a floating node, a second capacitor, and a switch configured to control connection between the second capacitor and the floating node. The second operation may include an acquiring a first sampling result corresponding to a signal detected in a state in which the switch is opened. The second operation may include acquiring a second sampling result corresponding to a signal detected in a state in which the switch is closed. The second operation may include reading out a pixel value based on the first sampling result and the second sampling result.

In an embodiment, reading out the pixel value may further include selectively outputting any one of the first sampling result or the second sampling result.

In an embodiment, the first operation may include outputting the first image frame based on a first exposure time. The second operation may include outputting the second image frame based on a second exposure time which is different from the first exposure time. The multi-frame capturing operation may include acquiring image data that has a dynamic range extended by synthesizing the first image frame and the second image frame.

A computer-readable non-transitory recording medium according to an embodiment may have a computer program recorded thereon to execute the above-described method when an electronic device including an image sensor executes the method.

An image sensor, an electronic device including the image sensor, and an operating method thereof according to various embodiments may freely set a light exposure time for capturing an image frame captured based on different readout modes in performing a multi-frame capturing operation.

An image sensor, an electronic device including the image sensor, and an operating method thereof according to various embodiments may reduce an increase rate of power consumption according to a readout method.

The effect achieved by the disclosure is not limited to those mentioned above, and other effects that are not mentioned above may be clearly understood to those skilled in the art based on the description provided below.

Methods based on the claims or the embodiments disclosed in the disclosure may be implemented in hardware, software, or a combination of both.

When implemented in software, a computer readable storage medium for storing one or more programs (software modules) may be provided. The one or more programs stored in the computer readable storage medium are configured for execution performed by one or more processors in an electronic device. The one or more programs include instructions for allowing the electronic device to execute the methods based on the claims or the embodiments disclosed in the disclosure.

The program (the software module or software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, and a magnetic cassette. Alternatively, the program may be stored in a memory configured in combination of all or some of these storage media. In addition, the configured memory may be plural in number.

Further, the program may be stored in an attachable storage device capable of accessing the electronic device through a communication network such as the Internet, an Intranet, a local area network (LAN), a wide LAN (WLAN), or a storage area network (SAN) or a communication network configured by combining the networks. The storage device may access via an external port to a device which performs the embodiments of the disclosure. In addition, an additional storage device on a communication network may access to a device which performs the embodiments of the disclosure.

In the above-described specific embodiments of the disclosure, elements included in the disclosure are expressed in singular or plural forms according to specific embodiments. However, singular or plural forms are appropriately selected according to presented situations for convenience of explanation, and the disclosure is not limited to a single element or plural elements. An element which is expressed in a plural form may be configured in a singular form or an element which is expressed in a singular form may be configured in plural number.

The term "unit" or "module" used in the disclosure refer to a hardware component such as a processor or a circuit, and/or a software component executed by a hardware component such as a processor.

A "unit", "module" may be implemented by a program that is stored in a storage medium which may be addressed, and is executed by a processor. For example, a "unit", "module" may be implemented by components such as software components, object-oriented software components, class components, and task components, processes, functions, attributes, procedures, sub-routines, segments of a program code, drivers, firmware, a micro code, a circuit, data, a database, data structures, tables, arrays and parameters.

Specific execution explained in the disclosure is merely an example, and the scope of the disclosure is not limited by any method. For the sake of clarity of the specification, descriptions of related-art electronic components, control systems, software, and other functional aspects of the systems are omitted.

In the disclosure, such phrase as "including at least one of a, b, or c" may refer to "including only a", "including only b", "including only c", "including a combination of two or more (including a and b, including b and c, including a and c, including all of a, b, c).

While specific embodiments have been described in the detailed descriptions of the disclosure, it will be understood by those skilled in the art that various changes in form and details may be made therein without departing from the spirit and scope of the disclosure. Therefore, the scope of the disclosure is defined not by explained embodiments but by the appended claims and equivalents to the claims.

## Claims

1. An electronic device comprising:
a lens unit;
an image sensor configured to receive light passing through the lens unit and to convert the light into an electrical signal; and
at least one processor 120 configured to control the image sensor,
wherein the image sensor is configured to:
when an image frame is outputted based on a first readout mode, read out a pixel value based on a first readout operation period;
when an image frame is outputted based on a second readout mode, read out a pixel value based on a second readout operation period which is longer than the first readout operation period; and
when performing a multi-frame capturing operation comprising a first operation of outputting a first image frame based on the first readout mode and a second operation of outputting a second image frame based on the second readout mode is performed based on a request of the at least one processor, perform the first operation based on a third readout operation period which is longer than or equal to the second readout operation period, and perform the second operation based on the third readout operation period.

2. The electronic device of claim 1, wherein the first readout mode comprises acquiring a pixel value based on normal correlated double sampling (CDS) comprising one reset sampling operation and one signal sampling operation, and wherein the second readout mode comprises acquiring a pixel value based on double conversion gain (DCG) CDS comprising two reset sampling operations and two signal sampling operations.

3. The electronic device of claim 1, wherein the multi-frame capturing operation comprises a reset operation of resetting a pixel which is included in a second line different from a first line from which the pixel value is read out, during a section excluding a section in which sampling is performed in the first operation and the second operation from the third readout operation period.

4. The electronic device of claim 3, wherein the image sensor comprises:
a light receiving element configured to convert the light into an electric signal; and
a first switch connected to the light receiving element,
wherein the reset operation comprises transmitting an operation signal for operating the first switch to the first switch,
wherein the image sensor is configured to restrict a section in which the operation signal is transmitted to the first switch 420 to a section excluding the section in which sampling is performed in the first operation and the second operation.

5. The electronic device of claim 1, wherein the second operation comprises a first signal sampling operation to acquire a first sampling result and a second signal sampling operation to acquire a second sampling result, and
wherein the image sensor is configured to output the second image frame based on bits that are acquired by synthesizing the first sampling result and the second sampling result.

6. The electronic device of claim 1, wherein the image sensor comprises a plurality of pixels,
wherein each of the plurality of pixels comprises a first capacitor connected to a floating node, a second capacitor, and a second switch configured to control connection between the second capacitor and the floating node, and
wherein the image sensor is configured to read out a pixel value based on a first sampling result which is acquired in a state in which the second switch is opened, and a second sampling result which is acquired in a state in which the second switch is closed.

7. The electronic device of claim 6, wherein the image sensor 230 further comprises a selector configured to selectively output any one of the first sampling result 1210 or the second sampling result 1220.

8. The electronic device of claim 1, wherein the image sensor is configured to:
output the first image frame based on a first exposure time; and
output the second image frame based on a second exposure time which is different from the first exposure time,
wherein the at least one processor is configured to acquire image data that has a dynamic range extended by synthesizing the first image frame and the second image frame.

9. A method for operating an electronic device comprising an image sensor, the method comprising:
selecting any one of a first readout mode, a second readout mode, or a multi-frame capturing mode;
when the first readout mode is selected, reading out a pixel value through a first sampling operation for a first readout operation period;
when the second readout mode is selected, reading out a pixel value through a second sampling operation for a second readout operation period which is longer than the first readout operation period; and
when the multi-frame capturing mode is selected, performing a multi-frame capturing operation to read out a first image frame and a second image frame,
wherein the multi-frame capturing operation comprises: a first operation to read out a pixel value of the first image frame based on the first sampling operation for a third readout operation period which is longer than or equal to the second readout operation period; and a second operation to read out a pixel value of the second image frame based on the second sampling operation for the third readout operation period.

10. The method of claim 9, wherein the first sampling operation comprises acquiring a pixel value based on normal CDS comprising one reset sampling operation and one sampling operation, and
wherein the second sampling operation comprises acquiring a pixel value based on DCG CDS comprising two reset sampling operations and two signal sampling operations.

11. The electronic device of claim 9, wherein the multi-frame capturing operation comprises a reset operation of resetting a pixel which is included in a second line different from a first line from which the pixel value is read out, during a section excluding a section in which sampling is performed in the first operation and the second operation from the third readout operation period.

12. The electronic device of claim 11, wherein each of a plurality of pixels included in the image sensor comprises:
a light receiving element configured to convert the light into an electric signal; and
a switch connected to the light receiving element,
wherein the reset operation comprises transmitting an operation signal for operating the switch of the pixel included in the second line to the switch,
wherein a section in which the operation signal is transmitted to the switch is within a section except for a section in which sampling is performed based on the first sampling operation, and a section in which sampling is performed based on the second sampling operation within the third readout operation period.

13. The electronic device of claim 9, wherein the second operation comprises:
a first signal sampling operation to acquire a first sampling result;
a second signal sampling operation to acquire a second sampling result; and
an operation of outputting the second image frame based on bits that are acquired by synthesizing the first sampling result and the second sampling result.

14. The method of claim 9, wherein the image sensor comprises a plurality of pixels,
wherein each of the plurality of pixels comprises a first capacitor connected to a floating node, a second capacitor, and a switch configured to control connection between the second capacitor and the floating node, and
wherein the second operation comprises:
acquiring a first sampling result corresponding to a signal detected in a state in which the switch is opened;
acquiring a second sampling result corresponding to a signal detected in a state in which the switch is closed; and
reading out a pixel value based on the first sampling result and the second sampling result.

15. The method of claim 9, wherein the first operation comprises outputting the first image frame based on a first exposure time,
wherein the second operation comprises outputting the second image frame based on a second exposure time which is different from the first exposure time, and
wherein the multi-frame capturing operation comprises acquiring image data that has a dynamic range extended by synthesizing the first image frame and the second image frame.
